# EUROPÄISCHE PATENTSCHRIFT

(11) **EP 1 173 682 B1**
(45) Veröffentlichungstag und Bekanntmachung des Hinweises auf die Patenterteilung: **22.10.2003**
(21) Anmeldenummer: 00926845.9
(22) Anmeldetag: 08.04.2000
(51) Int. Cl.: F16B 19/10

(54) **LÖSBARE BEFESTIGUNGSVORRICHTUNG ZUR HALTERUNG VON BAUTEILEN**
DETACHABLE MOUNTING DEVICE FOR FASTENING COMPONENTS
DISPOSITIF D'ASSEMBLAGE AMOVIBLE PERMETTANT DE FIXER DES COMPOSANTS

(30) Priorität: 27.04.1999 DE 29907428 U
(43) Veröffentlichungstag der Anmeldung: 23.01.2002
(73) Patentinhaber: FILTERWERK MANN + HUMMEL GMBH, 71631 Ludwigsburg (DE)
(72) Erfinder: KROHLOW, Matthias, D-71636 Ludwigsburg (DE); MIKL, Mathias, A-8700 Leoben (AT); RIEGER, Mario, D-71691 Freiberg (DE)
(74) Vertreter: Voth, Gerhard, Dipl.-Ing.
(86) Internationale Anmeldenummer: EP0003149
(87) Internationale Veröffentlichungsnummer: WO00065242

(56) Entgegenhaltungen:
- EP-A- 0 348 258
- DE-A- 2 062 555
- DE-A- 19 531 286
- FR-A- 2 763 657
- US-A- 3 319 918
- US-A- 4 726 722

## Beschreibung

### Stand der Technik

Die Erfindung betrifft eine lösbare Befestigungsvorrichtung zur Halterung von Bauteilen, insbesondere eines Luftfiltergehäuses oder Ansaugrohres im Motorraum eines Kraftfahrzeuges, entsprechend dem ersten Teil des Anspruchs 1 (DE 195 31 286 A).

Es ist beispielsweise aus der DE-OS 37 40 760 bekannt, dass an einem Luftfiltergehäuse eine Befestigungslasche angebracht ist, die ein Durchgangsloch aufweist. Es ist eine in das Durchgangsloch eingreifende lösbare Klammer vorhanden, die u-förmig und einstückig ausgebildet ist und im Bereich des Durchgangsloches an der Innenseite jedes Schenkels angeformte Hülsen aufweist, wobei an jedem Schenkel mindestens eine gegen die Befestigungslasche drückende Federzunge vorhanden ist.

### Aufgabenstellung

Der Erfindung liegt die Aufgabe zugrunde, eine lösbare Befestigungsvorrichtung der eingangs angegebenen Art so fortzubilden, dass eine leichte und kostengünstige Montage und ein sicherer Halt eines Bauteils auch bei vielschichtigen Gehäuseformen erreichbar ist.

### Vorteile der Erfindung

Die eingangs erwähnte lösbare Befestigungsvorrichtung zur Halterung von Bauteilen, insbesondere eines Luftfiltergehäuses oder eines Ansaugrohres, ist in vorteilhafter Weise erfindungsgemäß durch die Merkmale des Anspruchs 1 weitergebildet, wobei u.a. durch sich gegenüberliegende Durchgangslöcher an den zu befestigenden Gehäuse- oder sonstigen Teilen eines Bauteils ein sogenannter Spreizniet steckbar ist. An einem Ende liegt dieser mit einem über die Durchgangslöcher ragenden Vorsprung an und an seinem anderen Ende ist er mit Spreizelementen versehen, die im gespreizten Zustand die Durchgangslöcher hintergreifen und damit das Bauteil, wie zum Beispiel ein Luftfiltergehäuse, fest an die Fahrzeugkarosserie anfügen können.

Mit einem Gewindebolzen, der insbesondere während der Montage unter axialem Druck in eine entsprechendes, hier elastisch nachgebendes Gegengewinde im Inneren des Niets pressbar ist kann eine einfache und schnelle Montage der Befestigungsvorrichtung durchgeführt werden. Der Gewindebolzen kann auf einfache Weise auch mit einem Schraubschlitz versehen werden, mit dem der Gewindebolzen mittel eines entsprechenden Werkzeuges schraubbar ist und somit insbesondere bei der Demontage des Bauteils die Befestigungsvorrichtung leicht gelöst werden kann.

Im eingesteckten Zustand führt der Gewindebolzen dann zur Spreizung der Spreizelemente und zum sicheren Zusammenhalt der zusammengefügten Teile.

In radiale Ausnehmungen auf dem Umfang des Nietes können in vorteilhafter Weise die Wände des Bauteils oder weitere Zwischenstücke nach dem Einbau der Befestigungsvorrichtung eingreifen, so dass auch ein Gehäuse mit einem komplexen Aufbau der Gehäuseteile mittels der Befestigungsvorrichtung sicher zusammengefügt oder beispielsweise an ein Karosserieteil angefügt werden kann.

Zusätzliche vorteilhafte Weiterbildungen ergeben sich aus den restlichen Unteransprüchen. Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

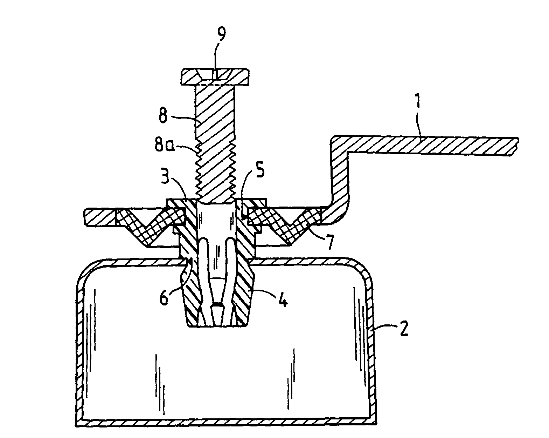

Ein Ausführungsbeispiel der erfindungsgemäßen Befestigungsvorrichtung zur Befestigung eines Bauteils wird anhand der Zeichnung erläutert. Die Figur der Zeichnung zeigt einen Schnitt durch eine solche Befestigungsvorrichtung zur Anbringung eines Filtergehäuses.

### Beschreibung des Ausführungsbeispiels

In der Figur ist eine Befestigungsvorrichtung für die Halterung eines Luftfiltergehäuses 1 an einem Karosserieteil 2 eines Kraftfahrzeuges gezeigt. Die Befestigungsvorrichtung weist einen als Spreizniet ausgeführten Niet 3 auf, der mit Spreizelementen 4 versehen ist und durch Durchgangslöcher 5 und 6 der zu verbindenden Teile 1 und 2 gesteckt wird. Der Niet 3 wird dabei in ein Entkopplungselement 7 eingeknöpft, das am Teil 1 angebracht ist.

In den Niet 3 wird bei der Montage der Befestigungsvorrichtung ein Gewindebolzen 8 eingesteckt, der mit einem Außengewinde versehen ist und dessen Gewindegänge in entsprechende Gewindegänge im Inneren des Nietes 3 eingreifen können, wobei beim axialem Hineindrücken des Gewindebolzens 8 durch eine elastisches Nachgeben des Materials ein Hineinschrauben vermeidbar ist.

Im eingesteckten Zustand hintergreifen die Spreizelemente 4 das Durchgangsloch 6 und sichern damit das Befestigungselement. Zur Demontage der Befestigungsvorrichtung kann der Gewindebolzen 8 mittels eines geeigneten Werkzeuges, das in einen Schraubschlitz 9 am Gewindebolzen 8 eingreift, der Gewindebolzen 8 herausgeschraubt werden, wodurch die Spreizelemente 4 ihre Spreizwirkung wieder verlieren können und damit die Demontage ermöglicht ist.

## Patentansprüche

1. Lösbare Befestigungsvorrichtung zur Halterung eines Luftfiltergehäuses (1) oder eines Ansaugrohres an der Karosserie (2) eines Fahrzeugs mit sich gegenüberliegenden Durchgangslöchern (5, 6) an den zu befestigenden Bauteilen (1, 2), bestehend aus einem Niet (3), der durch die Durchgangslöcher (5, 6) steckbar ist und an einem Ende mit einem über die Durchgangslöcher (5) ragenden Vorsprung anliegt und an seinem anderen Ende mit Spreizelementen (4) versehen ist, die im gespreizten Zustand die Durchgangslöcher (6) hintergreifen, können einem Gewindebolzen (8), der unter axialem Druck in eine entsprechendes Gegengewinde im Inneren des Niets (3) pressbar und zur Demontage auch schraubbar ist und im eingesteckten Zustand zum Spreizen der Spreizelemente (4) führt und mit radialen Ausnehmungen auf dem Umfang des Niets (3), in die die Wände des jeweiligen Bauteils (1, 2) oder Zwischenstücke (7) nach dem Einbau der Befestigungsvorrichtung eingreifen, **dadurch gekennzeichnet daß** der Niet (3) in ein Entkopplungselement (7) als Zwischenstück eingeknöpft ist.

## Claims

1. Detachable mounting apparatus for retaining an air filter housing (1) or an intake pipe on the body (2) of an automotive vehicle with oppositely situated through-holes (5, 6) on the components (1, 2) to be mounted, said device comprising a rivet (3) which is insertable through the through-holes (5, 6) and has, at one end, a projection protruding beyond the through-holes (5, 6) and is provided, at its other end, with splayable elements (4) which can engage behind the through-holes (6) in the splayed state, a threaded pin (8) which can be urged, by axial pressure, into a corresponding counterthread in the interior of the rivet (3) and is also screw-connectable for disassembly purposes and, in the inserted state, leads to the splaying of the splayable elements (4), and radial recesses on the periphery of the rivet (3), in which recesses the walls of the actual component (1, 2) or intermediate pieces (7) engage after the installation of the mounting apparatus, **characterised in that** the rivet (3) is fitted into an uncoupling element (7) as the intermediate piece.

## Revendications

1. Dispositif d'assemblage amovible permettant de fixer un boîtier de filtre à air (1) ou un tube d'aspiration à la carrosserie (2) d'un véhicule, avec des trous traversants (5, 6) opposés l'un à l'autre sur les composants à fixer (1, 2), se composant d'un rivet (3) qui peut être enfoncé à travers les trous traversants (5, 6) et appliqué par une extrémité avec une saillie s'étendant au-delà des trous traversants (5), et qui est pourvu à son autre extrémité d'éléments expansibles (4), qui à l'état expansé peuvent s'accrocher à l'arrière des trous traversants (6), d'une tige filetée (8), qui peut être poussée sous pression axiale dans un filet complémentaire correspondant à l'intérieur du rivet (3) et qui peut également être vissée pour le démontage et qui à l'état enfoncé conduit à l'écartement des éléments expansibles (4), et avec des cavités radiales sur la périphérie du rivet (3), dans lesquelles les parois du composant respectif (1, 2) ou des pièces intermédiaires (7) s'engagent après le montage du dispositif d'assemblage,
**caractérisé en ce que**
le rivet (3) est inséré dans un élément de démontage (7) formant pièce intermédiaire.
